# EUROPEAN PATENT APPLICATION

(11) **EP 0 712 233 A1**
(43) Date of publication of application: **15.05.1996**
(21) Application number: 95117686.6
(22) Date of filing: 09.11.1995
(51) Int. Cl.: H04N 1/29

(54) **Image forming apparatus**

(30) Priority: 09.11.1994 JP 274642/94
(71) Applicant: MITA INDUSTRIAL CO. LTD., Osaka 540 (JP)
(72) Inventor: Yanagida, Yoshiaki, c/o Mita Industrial Co., Ltd, Osaka-shi, Osaka 540 (JP); Toyoda, Masanori, c/o Mita Industrial Co., Ltd, Osaka-shi, Osaka 540 (JP)
(74) Representative: Patentanwälte Beetz - Timpe - Siegfried Schmitt-Fumian - Mayr

(57) **Abstract**

An analog switch (30) is provided on the input side of an A/D converter (16) provided on a line on which analog data of an original image read out by a CIS unit (15) for reading out original images is transferred to an image processing unit (40). A channel changeover signal for the analog switch (30) and a start signal for the A/D converter (16) are controlled so that the A/D conversion of a signal from a fixing temperature control thermistor (29) is performed in a spare time generated due to the difference between a charge accumulation time in an original image reading out operation by the CIS unit (15) and a data transfer time.

## Description

### BACKGROUND OF THE INVENTION

### Field of the Invention

The present invention relates to an image forming apparatus such as a facsimile machine and a digital electrophotographic copying machine.

### Description of the Prior Art

In an image forming apparatus of this type, a scanner unit which reads out originals is provided with an image reading device such as a CIS unit and a charge coupled device (CCD). Since in the data reading out operation performed by scanning the original, the image reading device transfers the read-out image data to an image processing unit which processes the read-out image data, an A/D converter is provided on an image data transfer line on the input side of the image processing unit. The analog data of the original is converted into digital format by the A/D converter.

The A/D converted image data is processed by the image processing unit and then converted into a laser beam by a laser beam generator. Then, the laser beam is irradiated onto the pre-charged surface of the photoreceptor drum to form an electrostatic latent image of the original image on the surface of the photoreceptor drum. Then, the photoreceptor drum rotates in one direction to bring the electrostatic latent image to a position where it faces a developing unit comprising a magnetic brush mechanism to be close to each other, and at the position, toner is applied to the electrostatic latent image by the developing unit to develop the latent image into a toner image. Then, the toner image is transferred onto a sheet of paper by a transfer charger provided in the downstream side of rotation direction of the photoreceptor drum, and is fixed onto a sheet of paper by a fixing unit.

In order to obtain a copy image which is faithful to the original in the above-described image forming processing, control such as the control of the fixing temperature at the time of the fixing of toner onto a sheet of paper is important. For example, in the case of the control of the fixing unit, the fixing unit comprises a roller pair consisting of a heating roller and a pressurizing roller, and while a sheet of paper is passing between these rollers, the toner image is heated and pressurized to be fixed onto the sheet. In this case, the temperature of the heating roller is an important factor to reproduce a sharp image.

For this reason, the heating roller of the fixing unit is provided with a fixing temperature control thermistor and the temperature data detected by the thermistor is transferred to the microcomputer in the form of an analog signal. The analog data is A/D converted and supplied to the microcomputer. The microcomputer controls the temperature of the heating roller based on the temperature data.

Conventionally, in transferring data from a variable temperature resistance device such as the fixing temperature control thermistor provided at need, to the microcomputer, a signal line exclusively used for the variable temperature resistance device is independently provided and on the input side of the microcomputer on the signal line, an A/D converter for converting data outputted from the variable temperature resistance device into digital format is provided.

In the above-described conventional arrangement, however, for example, since the A/D converter for converting the data from the fixing temperature control thermistor is provided independently of the A/D converter for converting the analog image data from the CIS unit, the number of A/D converters which are expensive increases. This is disadvantageous in cost. Since the size of the entire circuit increases, the reduction in size of the apparatus cannot be achieved. In addition, since the number of transfer lines provided between the sensors such as the fixing temperature control thermistor and the control unit increases, the circuit arrangement is complicated.

As a prior art which intends to simplify the transfer lines, Japanese Laid-open Patent Application No. S63-210959 discloses to simplify the circuit by selecting a plurality of signals at a signal selecting unit to form them into one signal and processing the signal successively at the control unit. This method is applicable for various kinds of image forming apparatuses. According to the arrangement of the prior art, since the analog data from the sensors and switches are received by the signal processing unit and then transmitted to the control unit by a time division method, the number of signal lines between the signal processing unit and the control unit can be reduced.

In the arrangement of the prior art, however, although the analog data from a sensor such as the fixing temperature control thermistor can be converted into digital format by a single A/D converter by arranging an A/D converter between the signal processing unit and the control unit, since the A/D converter used for this purpose is not used also for digital-converting the image data transferred from the image reading device such as a CIS, the problem has not been solved that another A/D converter is necessary in addition to the A/D converter for image data conversion.

### SUMMARY OF THE INVENTION

An object of the present invention is to provide an image forming apparatus which realizes a low cost control circuit where the arrangement of the signal processing circuit is simplified by using an A/D converter for converting the image data transferred from an image reading device to an image processing unit also for converting the analog data transmitted from a variable temperature resistance device such as a fixing temperature control thermistor.

To achieve the above-mentioned object, an image forming apparatus of the present invention is provided with: image reading means for reading an original image to output an image signal; a printer which forms a toner image through a photoreceptor to transfer the toner image onto a sheet of paper; temperature detecting means provided in said printer; signal changeover means for receiving said image signal and a temperature detection signal from the temperature detecting means to output the image signal during a first period and output the temperature detection signal during a second period; an analog-to-digital converter which converts an output of said signal changeover means into a digital signal; means for supplying an analog-to-digital converted image signal to said printer to form a latent image on the photoreceptor; and controlling means for controlling a predetermined portion of said printer by use of an analog-to-digital converted temperature detection signal.

### BRIEF DESCRIPTION OF THE DRAWINGS

This and other objects and features of this invention will become clear from the following description, taken in conjunction with the preferred embodiments with reference to the accompanied drawings in which:
Fig. 1 is a block diagram schematically showing the arrangement of a facsimile machine embodying the present invention;
Fig. 2 is a block diagram showing a connection between its control unit and other elements;
Fig. 3 is a longitudinal sectional front view schematically showing the arrangement of a printer;
Fig. 4 is a block diagram schematically showing a control unit of a CIS unit and a fixing temperature control thermistor; and
Fig. 5 is a time chart showing the time of generation of timing signals.

### DESCRIPTION OF THE PREFERRED EMBODIMENTS

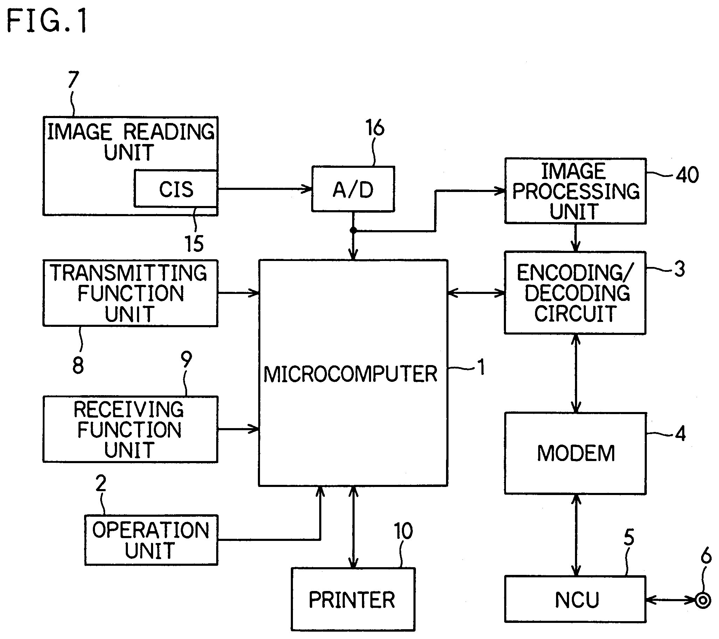

Hereinafter, an embodiment where the present invention is employed for a facsimile machine will be described with reference to the drawings. Referring to Fig. 1, there is shown a block diagram of an image processing and transmitting system of the embodiment. Reference numeral 1 represents a microcomputer serving as an operation controlling means which controls the entire system. Reference numeral 2 represents an operation unit provided with a plurality of keys or the like. Reference numeral 3 represents an encoding/decoding circuit. Reference numeral 4 represents a modem. Reference numeral 5 represents a network control unit (NCU). Reference numeral 6 represents a public telephone line.

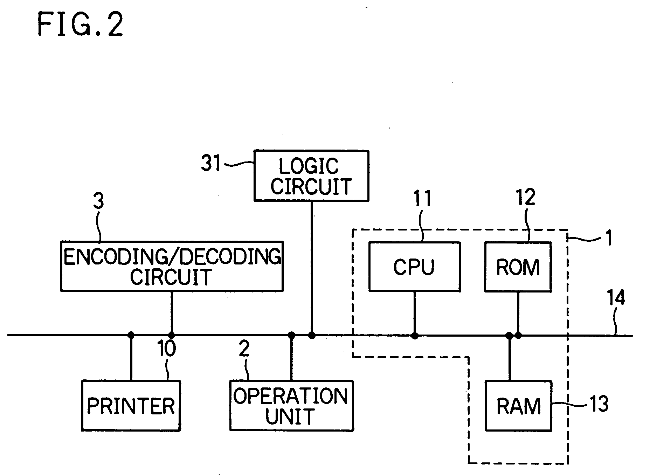

Reference numeral 7 represents an image reading unit which reads out an original image. Reference numeral 8 represents a transmitting function unit which encodes image data according to a predetermined encoding method to produce signals necessary for facsimile transmission. Reference numeral 9 represents a receiving function unit which decodes the received codes into image data and executes a predetermined reception control protocol. Reference numeral 10 represents a printer. Reference numeral 40 represents an image processing unit which processes image data A/D converted by an A/D converter. The microcomputer 1 includes, as shown in Fig. 2, a central processing unit (CPU) 11, a program storing read only memory (ROM) 12 and a random access memory (RAM) 13. The above-mentioned elements are connected to the CPU 11 through a data bus 14. Together with the microcomputer 1, a hardware logic circuit 31 serving as a timing signal generating means is connected.

In the signal processing performed on the transmitting side of the facsimile machine arranged as described above, first, the original image data read out by the image reading unit 7 is transferred to the image processing unit 40. In this embodiment, an original image is read out while the original is scanned by a contact-type image sensor (hereinafter, referred to as CIS unit) 15 serving as an image reading device arranged in the image reading unit 7. Since the image data thus read out is an analog signal, an A/D converter 16 for converting the analog image data into digital format is provided on an image data transfer line on the input side of the image processing unit 7. The digital-converted image data is processed by the image processing unit 40, encoded by the encoding/decoding circuit 3, modulated by the modem 4, and then, transmitted from the NCU 5 through the telephone line.

In the signal processing performed on the receiving side, the received data is demodulated by the modem 4, decoded into the image data by the encoding/decoding circuit 3, and then, outputted onto a sheet of paper from the printer 10. Further, in the facsimile machine, the original image data read out by the image reading unit 7 can be outputted from the printer 10 as a copy image.

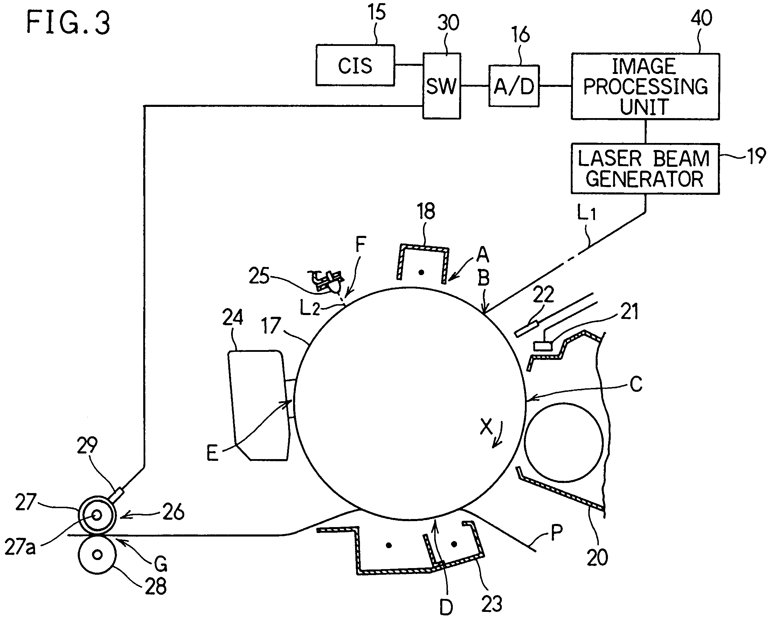

Referring to Fig. 3, there is shown an outline of the mechanical arrangement of the printer 10. Reference numeral 17 represents a photoreceptor drum rotated in a direction of arrow x. In the periphery of the drum 17, a charging area A, an exposure area B, a development area C, a transfer area D, a cleaning area E and a change removing area F are set in this order in the rotation direction of the drum 17. In the charging area A, a charger 18 is arranged. The drum surface is charged by a high voltage generated at the charger 18.

When the drum 17 rotates so that the charged portion on the drum surface reaches the exposure area B, reflected light (exposure light) L₁ of the original image is irradiated at the exposure area B to thereby form an electrostatic latent image of the original image. The irradiation of the exposure light L₁ in the exposure area C is performed by the following manner: The image data obtained by the CIS unit 15 is processed by the image processing unit 40 and converted into the laser beam (exposure light) L₁ by a laser beam generator 19 having its operation controlled based on a command from the image processing unit 40 to irradiate the surface of the drum 17 moving in the exposure area B.

When the drum 17 is further rotated to reach the development area C, toner is supplied from a developer unit 20 to the drum surface and the toner adheres onto the electrostatic latent image to form a toner image of the original image. In the vicinity of the developer unit 20, a toner density control thermistor 21 for detecting the atmospheric temperature around the developer unit 20 is provided at need. Reference numeral 22 represents a surface-potential electrometer for measuring the surface potential of the drum 17 in the development area C. Based on the detection value, the microcomputer 1 controls the voltage applied to the charger 18.

In the transfer area D, a voltage of a polarity opposite to that of the toner is applied by a transfer charger 23 so that the toner image formed on the drum surface in the development area C is transferred onto a sheet P fed to the transfer area D by way of a sheet feeding path passing below the drum 17. After the transfer, the residual toner on the drum surface is removed by a cleaner 24 in the cleaning area E and a charge removing light L₂ is irradiated onto the drum surface by a charge removing lamp 25 to remove the charge on the drum surface. Thereafter, the drum 17 returns to the charging area A to be ready for the next copying process in a reception mode and a copy mode.

On the other hand, the sheet P onto which the image has been transferred is separated from the drum surface and conveyed to a thermal fixing area G allotted in the downstream side of the sheet feeding path. In the thermal fixing area G, a fixing unit 26 is arranged. The fixing unit 26 includes a heating roller 27 having a heater 27a in its center and a pressurizing roller 28 which is rotatively in contact with the lower surface of the heating roller 27.

The surface of the transferred sheet P conveyed to the thermal fixing area G onto which surface the toner image has been transferred is pressed against the heating roller 27 while the sheet P is passing between the peripheries of the heating and pressurizing rollers 27 and 28 so that the toner is melted by the heating by the heater 27a, and the surface is pressed against the periphery of the heating roller 27 by the pressurizing roller 28 so that the toner image of the original transferred onto the surface of the sheet P is fixed. Reference numeral 29 represents a fixing temperature control thermistor provided in the vicinity of the heating roller 27. The fixing temperature control thermistor, which is made by setting a thermistor device within a sponge-made protector which faces the heating roller surface, indirectly measures the surface temperature of the roller.

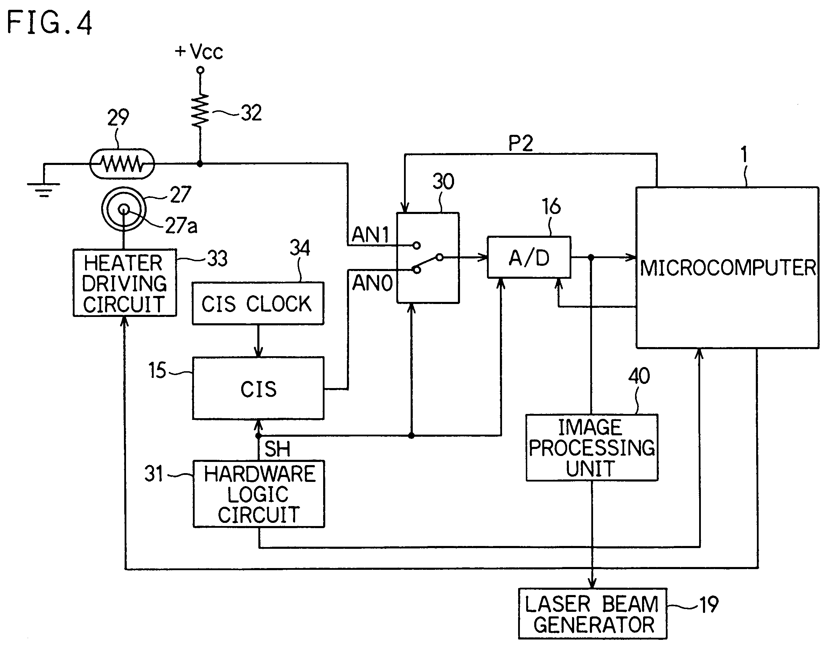

Fig. 4 shows a control system of the CIS unit and the fixing temperature control thermistor 29. As shown in the figure, in this embodiment, the above-described A/D converter 16 provided on the image data transfer line is used also for A/D converting the analog data from the CIS unit 15 and the fixing temperature control thermistor 29.

Specifically, an input changeover analog switch 30 is arranged on the input side of the A/D converter 16 provided on the image data transfer line for transferring images from the CIS unit 15. By changing over the analog switch 30 in an alternative way based on a timing signal SH outputted from the hardware logic circuit 31 which controls the CIS unit 15 and on a timing signal P2 outputted from the microcomputer 1, the detection output of the fixing temperature control thermistor 29 is A/D converted during a spare time in the transfer of the image data from the CIS unit 15.

As the A/D converter 16, an A/D converter of approximately 8 bits is suitable. The reason why the timing signal SH is outputted from the hardware logic circuit 31 is that in view of the data processing speed of the CIS unit 15, the microcomputer 1 has a problem in its responsibility. However, the timing signal SH may be outputted from the microcomputer 1.

The CIS unit 15 is a thin cylinder having a length substantially the same as the sheet width where a set of a sensor device and a light source including a light emitting diode (LED) array is packaged. When an original is inserted, the CIS unit 15 reads out the original image every line (in one main scanning direction). The output signal of the CIS unit 15 is coupled to a channel AN0 of the analog switch 30. For example, in the case of the G3 facsimile machine, the number of pixels of a whole A4 size sheet is 2376×1728. The main scanning direction of the CIS unit 15 is the lateral direction of the original, and when one line has been read out, the next line is read out in a similar way.

In this case, since the CIS unit 15 which reads out the original image requires 5.0ms as the time required for accumulating the reflected light of the original, i.e. as charge accumulation time, the period for processing one line of the original is regulated to 5.0ms. On the contrary, the time required for shifting the image data from the CIS unit 15 to the image processing unit 40 to transmit it in series, i.e. the time for transmitting one line of the original image is 4.2ms. Therefore, the difference 0.8ms between the period for processing one line of the original and the time for transmitting one line data is the spare time during which the A/D converter 16 is not converting the data from the CIS unit 15.

The fixing temperature control thermistor 29 is provided between ground and a channel AN1 of the analog switch 30. A voltage +Vcc of a power source is divided by the thermistor 29 and resistor 32 to generate an analog detection data. The analog detection data representative of the surface temperature of the heating roller 27 is transmitted via channel AN1 and the analog switch 30 to the A/D converter 16 where the data is converted into digital format. Thereafter, the digital data is supplied to the microcomputer 1. The microcomputer 1 controls the heater 27a of the heating roller 27 through a heater driving circuit 33 based on the temperature information from the fixing temperature control thermistor 29.

Since the conversion of the data from the fixing temperature control thermistor 29 is normally performed approximately every 20ms and completed in a very short period of several microseconds, it is fairly possible for the A/D converter 16 to perform A/D conversion in the 0.8ms period during which the A/D conversion of image data of the CIS unit 15 is unnecessary.

Subsequently, an operation to change over the analog switch 30 will be described. For example, when the image forming operation is performed by the printer 10, the channel of the analog switch 30 has been changed over to AN0, i.e. to the side connected to the signal line from the CIS unit 15. The A/D converter 16 converts the image data into digital format in 4.2ms before the 5.0ms period for reading out one line of the original. At this time, the timing signal SH to change over the channel of the analog switch 30 and the timing signal SH to start the driving of the A/D converter 16 are automatically generated by the hardware logic circuit 31.

In this case, after one line of the original image is read out by the CIS unit 15, while the second line is read out, the image data of the read-out one line is transferred to a register in the CIS unit 15 based on the line start signal SH, successively shifted by a CIS clock, A/D converted by the A/D converter 15 and transferred to the image processing unit 40. Specifically, the image data is transmitted to a shift register incorporated in the CIS unit 15 and successively transmitted from the shift register to the A/D converter 16 through the analog switch 30. The signal transmission is performed while the second line is read out by the CIS unit 15.

After the reading (4.2ms) of one line data of the original is completed, the hardware logic circuit 31 calculates and recognizes the spare time to apply an interrupt to the microcomputer 1. Thereby, the changeover signal (timing signal P2) is generated by the microcomputer 1, so that the channel of the analog switch 30 is changed over from AN0 to AN1 which is the side of the signal line from the fixing temperature control thermistor 29 and a reset start signal for the A/D converter 16 is generated by the microcomputer 1. For this reason, in 0.8ms before the start of the next reading out of the original image data (second line), the analog signal representative of the temperature of the heater transferred from the thermistor 29 is converted into digital format by the A/D converter 16 and supplied to the microcomputer 1.

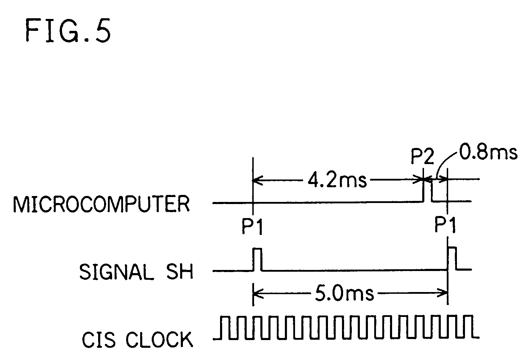

Fig. 5 is a time chart showing the time of generation of the timing signals. As shown in the figure, the CIS unit 15 is supplied with a clock signal from a CIS clock 34 all the time. The CIS unit 15 outputs signals to the image data transfer line all the time independently of the reading out of the original. Black data irrelevant to the image data is continuously transmitted before and after the transmission of the one line data of the original, e.g. 1728 pixels. The length of the black data is predetermined and the hardware logic circuit 31 ignores a clock number corresponding to the black data as an invalid data.

The logic circuit 31 automatically generates the timing signal to change over the channel of the analog switch 30 to AN0 and the timing signal SH to start the driving of the A/D converter 16 at the timing of P1 at the start of the 4.2ms shift signal transmitting period which is effective as the image data, and after 4.2ms, outputs to the microcomputer an interrupt signal to notify the completion of the data transfer from the CIS unit 15. Receiving the interrupt signal, the CPU 11 generates the timing signal to change over the channel of the analog switch 30 to AN1 and the timing signal (reset start signal) to start the driving of the A/D converter 16, whereby the analog data of the fixing temperature control thermistor 29 are converted into digital format.

The digital conversion of the analog data from the fixing temperature control thermistor 29 is completed in a short period of time as mentioned above. After the completion of the conversion, the channel of the analog switch 30 is again changed over to the AN0 which is the side of the signal line from the CIS unit 15 by the CPU 11 of the microcomputer 1.

When 5ms has elapsed after the start of reading out of the original image data, in order to A/D convert the next line of the original image, the logic circuit 31 automatically returns the channel of the analog switch 30 from AN1 to AN0 and generates the timing signal (A/D conversion start signal) P1, whereby the digital conversion of the second line of the image data by the A/D converter 16 is started.

The present invention is employable for an arrangement using a CCD as the image reading device instead of the CIS unit. In this case, an operation the same as the operation by the control unit using the CIS unit is performed in principle.

In addition to the outputs of the CIS unit 15 and the fixing temperature control thermistor 29, the output of the toner density control thermistor 21 requires A/D conversion. As well known, the setting of the density of toner supplied from the developer unit 20 is closely related with the atmospheric temperature around the developer unit 20. The toner density control thermistor 21 is provided to measure the atmospheric temperature around the developer unit 20. The temperature data detected by the thermistor 21 is A/D converted and supplied to the microcomputer 1. Based on the temperature data, the microcomputer 1 controls the density of toner supplied from the developer unit 20.

In the present invention, the A/D converter 16 may perform the A/D conversion of the analog data from the toner density control thermistor 21 instead of the A/D conversion of the analog data from the fixing temperature control thermistor 29. The operation to change over the analog switch 30 is the same as that in the above-described case of the fixing temperature control thermistor 29. By changing over between the A/D conversion of the data from the fixing temperature control thermistor 29 and the A/D conversion of the data for the toner density control thermistor 21 so as to be performed at different timings, three A/D conversion processings, i.e. the A/D conversion of the data from the CIS unit 15, the toner density control thermistor 21 and the fixing temperature control thermistor 29 can be performed by the A/D converter 16.

As described above, according to the present invention, in an image forming apparatus having an image reading device and a variable temperature resistance device such as the fixing temperature control thermistor and the toner density control thermistor, when it is unnecessary to simultaneously A/D convert data, in order that the analog data detected by the variable temperature device is A/D converted by using the difference between the charge accumulation time and the data transfer time, changeover is made between the two inputs by the input to the A/D converter so that digital conversion of two analog data can be performed by a single A/D converter 16. Consequently, only one A/D converter is necessarily provided in the circuit. Thus, the arrangement of the control circuit is simplified to reduce the cost and size of the apparatus.

Obviously, many modifications and variations of the present invention are possible in light of the above teachings. It is therefore to be understood that within the scope of the appended claims, the invention may be practiced other than as specifically described.

## Claims

1. An image forming apparatus comprising:
image reading means (7) for reading an original image to output an image signal;
a printer (10) which forms a toner image through a photoreceptor to transfer the toner image onto a sheet of paper (P);
temperature detecting means provided in said printer (10);
signal changeover means for receiving said image signal and a temperature detection signal from the temperature detecting means to output the image signal during a first period and output the temperature detection signal during a second period;
an analog-to-digital converter (16) which converts an output of said signal changeover means into a digital signal;
means for supplying an analog-to-digital converted image signal to said printer (10) to form a latent image on the photoreceptor; and
controlling means (1) for controlling a predetermined portion of said printer (10) by use of an analog-to-digital converted temperature detection signal.

2. An image forming apparatus according to claim 1, wherein said temperature detecting means is a fixing temperature controlling thermistor which senses a heating temperature of a fixing unit that fixes the toner image onto the sheet of paper (P).

3. An image forming apparatus according to claim 1, wherein said temperature detecting means is a toner density controlling thermistor (21) which senses an atmospheric temperature around a developer unit (20).

4. An image forming apparatus provided with an image data transfer line which converts an analog data of an original image read out by an image reading device (7) into digital format to transfer the data to an image processing unit (40) for processing image data, said image forming apparatus comprising:
an analog switch (30) for input changeover having its first input terminal connected to an output side of the image reading device, having its second input terminal connected to an output terminal of a temperature sensing device, and having its output terminal connected to an analog-to-digital converter (16); and
timing signal generating means for generating a changeover signal for the analog switch (30) and a start signal for the analog-to-digital converter (16).

5. An image forming apparatus according to claim 4, wherein said timing signal generating means generates the changeover signal for the analog switch (30) and the start signal for the analog-to-digital converter (16) so that an analog-to-digital conversion of a signal from the temperature sensing device is performed in a spare time generated due to a difference between a charge accumulation time in an original image reading out operation by the image reading device (7) and a data transfer time.

6. An image forming apparatus according to claim 4, wherein said temperature sensing device is a fixing temperature control thermistor (29) which senses a heating temperature of a fixing unit that fixes a toner image onto a sheet of paper (P).

7. An image forming apparatus according to claim 4, wherein said temperature sensing device is a toner density control thermistor (21) which senses an atmospheric temperature around a developer unit (20).
